# EUROPEAN PATENT APPLICATION

(11) **EP 4 481 846 A1**
(43) Date of publication of application: **25.12.2024**
(21) Application number: 24182453.1
(22) Date of filing: 16.06.2024
(51) Int. Cl.: H01M 4/133, H01M 4/134, H01M 4/1393, H01M 4/1395, H01M 4/36, H01M 4/38, H01M 4/587, H01M 4/62, H01M 10/0525, H01M 4/02

(54) **NEGATIVE ELECTRODE FOR SECONDARY BATTERY AND MANUFACTURING METHOD OF NEGATIVE ELECTRODE FOR SECONDARY BATTERY**

(30) Priority: 20.06.2023 KR 20230078720
(71) Applicant: SK On Co., Ltd., Seoul 03161 (KR)
(72) Inventor: JO, Yeong Min, 34124 Daejeon (KR); KIM, In Ha, 34124 Daejeon (KR); PARK, Sung Jun, 34124 Daejeon (KR); HWANG, Hye Won, 34124 Daejeon (KR)
(74) Representative: Stolmár & Partner Patentanwälte PartG mbB

(57) **Abstract**

A negative electrode for secondary batteries according to an embodiment of the present disclosure may include: a negative electrode current collector; a first negative electrode active material layer formed on at least one surface of the negative electrode current collector and including a first silicon-based negative electrode active material; and a second negative electrode active material layer formed on the first negative electrode active material, including a second silicon-based negative electrode active material, and having a greater thickness than that of the first negative electrode active material layer, wherein in the first negative electrode active material layer, the content of the first silicon-based negative electrode active material may be 5% by weight or less based on the total weight of the first negative electrode active material layer, and the weight percentage of the second silicon-based negative electrode active material in the second negative electrode active material layer based on the total weight of the second negative electrode active material layer may be greater than the weight percentage of the first silicon-based negative electrode active material in the first negative electrode active material layer based on the total weight of the first negative electrode active material layer.

## Description

### BACKGROUND OF THE INVENTION

### 1. Field

The embodiments of the present disclosure relate to a negative electrode for secondary batteries and a manufacturing method of the negative electrode for secondary batteries.

### 2. Description of the Related Art

As the electronics, communications, and space industries develop, demand for lithium secondary batteries as an energy power source is drastically increasing. In particular, as the importance of global eco-friendly policies is emphasized, the electric vehicle market is growing swiftly, and research and development on lithium secondary batteries are being actively conducted worldwide.

A lithium secondary battery includes a positive electrode, a negative electrode, and a separator disposed therebetween, and a positive electrode and a negative electrode are each provided with an active material which lithium ions may be inserted to and extracted from.

When charging and discharging of a lithium secondary battery is repeated, the capacity may rapidly decrease as the negative electrode active material repeatedly undergo volume expansion and contraction. In particular, when a silicon-based negative electrode active material is used, the volume change may be more severe. Therefore, a new type of negative electrode that can overcome these problems is required.

### SUMMARY OF THE INVENTION

According to one aspect of the present disclosure, it is possible to provide a negative electrode for a secondary battery with a large capacity and a long cycle life, and a method for manufacturing the negative electrode for a secondary battery.

The battery cell of the present disclosure can be widely applied in the field of electric vehicles, battery charging stations, energy storage system (ESS), and green technology, such photovoltaics, and wind power generation using batteries.

In addition, the battery cell of the present disclosure can be used in eco-friendly electric vehicles mobility to prevent climate change by suppressing air pollution and greenhouse gas emissions, including electric vehicles and hybrid vehicles.

A negative electrode for secondary batteries according to an embodiment of the present disclosure includes: a negative electrode current collector; a first negative electrode active material layer formed on at least one surface of the negative electrode current collector and including a first silicon-based negative electrode active material; and a second negative electrode active material layer formed on the first negative electrode active material, including a second silicon-based negative electrode active material, and having a greater thickness than that of the first negative electrode active material layer, wherein in the first negative electrode active material layer, the content of the first silicon-based negative electrode active material is 5% by weight or less based on the total weight of the first negative electrode active material layer, and the weight percentage of the second silicon-based negative electrode active material in the second negative electrode active material layer based on the total weight of the second negative electrode active material layer is greater than the weight percentage of the first silicon-based negative electrode active material in the first negative electrode active material layer based on the total weight of the first negative electrode active material layer.

In one embodiment, the first silicon-based negative electrode active material and the second silicon-based negative electrode active material may include one or more selected from the group consisting of SiOₓ (0≤x<2), an Si/C composite, and an Si alloy.

In one embodiment, the first negative electrode active material layer and the second negative electrode active material layer may further include a carbon-based negative electrode active material.

In one embodiment, the carbon-based negative electrode active material may include one or more selected from the group consisting of artificial graphite, natural graphite, hard carbon, soft carbon, carbon black, and graphene.

In one embodiment, the sum of the contents of the first silicon-based negative electrode active material and the second silicon-based negative electrode active material included in the entire first negative electrode active material layer and the second negative electrode active material layer may be 5% by weight to 20% by weight based on the total weight of the entire first negative electrode active material layer and the second negative electrode active material layer.

In one embodiment, the content of the carbon-based negative electrode active material included in the entire first negative electrode active material layer and the second negative electrode active material layer may be 75% by weight to 95% by weight based on the total weight of the entire first negative electrode active material layer and the second negative electrode active material layer.

In one embodiment, the ratio of the thickness of the first negative electrode active material layer to the thickness of the second negative electrode active material layer may be 4:6 to 1:9.

In one embodiment, the content of the second silicon-based negative electrode active material in the second negative electrode active material layer may be 6% by weight to 35% by weight based on the total weight of the second negative electrode active material layer.

In one embodiment, the first negative electrode active material layer and the second negative electrode active material layer may further include a conductive material.

In one embodiment, the first negative electrode active material layer and the second negative electrode active material layer may further include a binder.

In one embodiment, the weight percentage of the binder in the first negative electrode active material layer based on the total weight of the first negative electrode active material layer may be greater than the weight percentage of the binder in the second negative electrode active material layer based on the total weight of the second negative electrode active material layer.

In one embodiment, the weight percentage of the carbon-based negative electrode active material in the first negative electrode active material layer based on the total weight of the first negative electrode active material layer may be greater than the weight percentage of the carbon-based negative electrode active material in the second negative electrode active material layer based on the total weight of the second negative electrode active material layer.

In one embodiment, the sum of the contents of the fist silicon-based negative electrode active material and the carbon-based negative electrode active material in the first negative electrode active material layer based on the total weight of the first negative electrode active material layer may be 85% by weight to 98% by weight.

In one embodiment, the sum of the contents of the second silicon-based negative electrode active material and the carbon-based negative electrode active material in the second negative electrode active material layer based on the total weight of the second negative electrode active material layer is 85% by weight to 98% by weight.

A manufacturing method of a negative electrode for secondary batteries according to an embodiment of the present disclosure includes: a step of forming a first layer by applying a first composition including a first silicon-based negative electrode active material onto a negative electrode current collector; and a step of forming a second layer that is thicker than the first layer by applying a second composition including a second silicon-based negative electrode active material onto the first layer, wherein the content of the first silicon-based negative electrode active material in the first composition is 5% by weight or less based on the total weight of solids included in the first composition, and the weight percentage of the second silicon-based negative electrode active material in the second composition based on the total weight of solids included in the second composition is greater than the weight percentage of the first silicon-based negative electrode active material in the first composition based on the total weight of solids included in the first composition.

In one embodiment, the first composition and the second composition may further include a carbon-based negative electrode active material.

In one embodiment, the weight percentage of the carbon-based negative electrode active material in the first composition based on the total weight of solids included in the first composition may be greater than the weight percentage of the carbon-based negative electrode active material in the second composition based on the total weight of solids included in the second composition.

In one embodiment, the first composition and the second composition may further include a binder.

In one embodiment, the weight percentage of binder in the first composition based on the total weight of solids included in the first composition may be greater than the weight percentage of the binder in the second composition based on the total weight of solids included in the second composition.

In one embodiment, the ratio of the thickness of the first layer to the thickness of the second layer is 4:6 to 1:9.

According to the present disclosure, a negative electrode for secondary batteries with a large capacity and a long cycle life and a manufacturing method for the negative electrode for secondary batteries may be provided.

### BRIEF DESCRIPTION OF THE DRAWINGS

FIG. 1 is a diagram for explaining a negative electrode for secondary batteries according to an embodiment of the present disclosure.
FIG. 2 is a flowchart for explaining a manufacturing method of a negative electrode for secondary batteries according to an embodiment of the present disclosure.
FIG. 3 is a diagram for explaining a negative electrode for secondary batteries according to one comparative example of the present disclosure.
FIG. 4 is a diagram for explaining a negative electrode for secondary batteries according to another comparative example of the present disclosure.
FIG. 5 is a diagram for explaining a negative electrode for secondary batteries according to still another comparative example of the present disclosure.
FIG. 6 shows simulation results representing a change in porosity of a negative electrode for secondary batteries according to one embodiment of the present disclosure.
FIG. 7 shows simulation results representing a change in porosity of a negative electrode for secondary batteries according to one comparative example of the present disclosure.
FIG. 8 shows simulation results representing a change in porosity of a negative electrode for secondary batteries according to another comparative example of the present disclosure.
FIG. 9 shows simulation results representing a change in porosity of a negative electrode for secondary batteries according to still another comparative example of the present disclosure.
FIG. 10 is a graph showing capacity maintenance rates of an embodiment and comparative examples of the present disclosure, according to an experimental example of the present disclosure.
FIG. 11 is a graph showing capacity maintenance rates of an embodiment and a comparative example of the present disclosure, according to an experimental example of the present disclosure.

### DETAILED DESCRIPTION

The structural or functional descriptions of embodiments disclosed in the present specification or application are merely illustrated for the purpose of explaining embodiments according to the technical principle of the present invention, and embodiments according to the technical principle of the present invention may be implemented in various forms in addition to the embodiments disclosed in the specification of application. In addition, the technical principle of the present invention is not construed as being limited to the embodiments described in the present specification or application.

### Negative electrode for secondary batteries

In one aspect of the present disclosure, provided is a negative electrode for secondary batteries according to an embodiment of the present disclosure includes: a negative electrode current collector; a first negative electrode active material layer formed on at least one surface of the negative electrode current collector and including a first silicon-based negative electrode active material; and a second negative electrode active material layer formed on the first negative electrode active material, including a second silicon-based negative electrode active material, and having a greater thickness than that of the first negative electrode active material layer, wherein in the first negative electrode active material layer, the content of the first silicon-based negative electrode active material is 5% by weight or less based on the total weight of the first negative electrode active material layer, and the weight percentage of the second silicon-based negative electrode active material in the second negative electrode active material layer based on the total weight of the second negative electrode active material layer is greater than the weight percentage of the first silicon-based negative electrode active material in the first negative electrode active material layer based on the total weight of the first negative electrode active material layer.

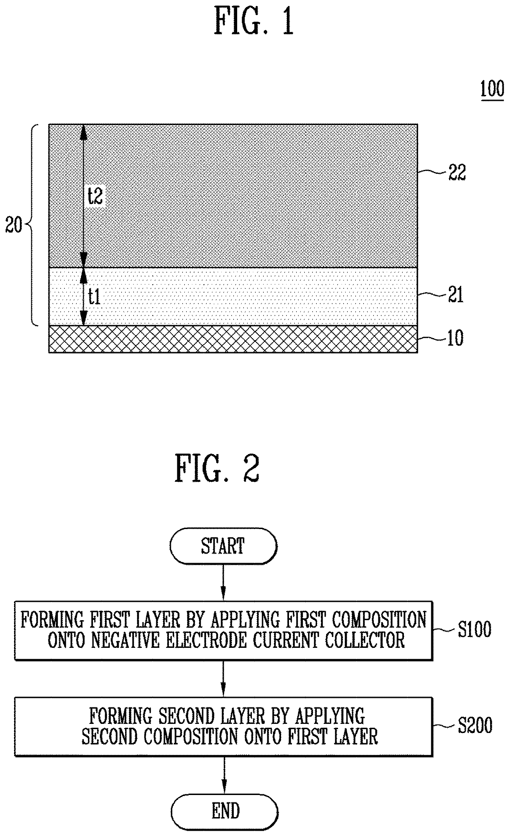

FIG. 1 is a diagram for explaining a negative electrode for secondary batteries according to one embodiment of the present disclosure. Hereinafter, a negative electrode for secondary batteries according to an embodiment of the present disclosure will be described with reference to FIG. 1.

Referring to FIG. 1, a negative electrode 100 includes a negative electrode current collector and a negative electrode active material layer 20.

A negative electrode current collector 10 is not particularly limited as long as it is conductive without causing chemical changes in a secondary battery. For example, copper, stainless steel, aluminum, nickel, titanium, calcined carbon, copper or stainless steel surface-treated with carbon, nickel, titanium, silver, or the like, an aluminum-cadmium alloy, or the like may be used. In addition, fine irregularities may be formed on the surface to strengthen the bonding power of a negative electrode active material, and it may be used in various forms such as films, sheets, foils, nets, porous materials, foams, and non-woven fabrics.

A negative electrode active material layer 20 may be formed on at least one surface of a negative electrode current collector 10. In other words, a negative electrode active material layer 20 may be formed on one side of a negative electrode current collector 10 or on both sides of the negative electrode current collector 10.

A negative electrode active material layer 20 includes a first negative electrode active material layer 21 and a second negative electrode active material layer 22.

A first negative electrode active material layer 21 is formed on at least one surface of a negative electrode current collector 10. A first negative electrode active material layer 21 includes a first silicon-based negative electrode active material.

In an embodiment, a first silicon-based negative active material may include one or more selected from the group consisting of SiOₓ (0≤x<2), an Si/C composite, and an Si alloy. The x corresponds to the number ratio of O to Si included in the SiOₓ (0≤x<2). In one embodiment, the average particle diameter (D₅₀) of SiOₓ (0≤x<2) may be 4 µm to 9 µm, or 5 µm to 7 µm. When the above range is satisfied, a decrease in the lifespan of secondary batteries due to volume expansion of a silicon-based material may be prevented, and side reactions on the surface of a silicon-based material may be suppressed. In one embodiment, the specific surface area of SiOₓ (0≤x<2) may be 4 m²/g to 9 m²/g, or 5 m²/g to 8 m²/g. When the above range is satisfied, a conductive network with a conductive material may be improved. An Si/C composite is made by heat treatment (firing) while carbon is combined with SiOₓ (0≤x<2) particles, so that it may be in the form of a carbon material coated on the surface of SiOₓ (0≤x<2) particles or in the form of carbon dispersed in an atomic state inside SiOₓ (0≤x<2) particles. An Si alloy (Si-alloy) may be a form in which Si is alloyed with one or more metals selected from the group consisting of Zn, Al, Mn, Ti, Fe, and Sn.

A silicon-based negative electrode active material may exhibit higher capacity compared to a carbon-based material, implementing a high energy density per equal volume.

In an embodiment, the content of a first silicon-based negative electrode active material in a first negative electrode active material layer 21 may be 5% by weight or less based on the total weight of the first negative electrode active material layer 21. Specifically, in a first negative electrode active material layer 21, a first silicon-based negative electrode active material may be included in an amount of 0.2% by weight to 4.5% by weight based on the total weight of the first negative electrode active material layer 21, and more specifically, it may be included in an amount of 0.5% by weight to 4% by weight.

When a first silicon-based negative electrode active material in the same content as the above-described range is included in a first negative electrode active material layer 21, a higher capacity may be achieved due to the inclusion of a silicon-based active material, and at the same time, conductivity deterioration according to the change in volume may be prevented.

In an embodiment, a first negative electrode active material layer 21 may further include a carbon-based negative electrode active material. A carbon-based negative electrode active material may include one or more selected from the group consisting of artificial graphite, natural graphite, hard carbon, soft carbon, carbon black, and graphene. In one embodiment, the carbon black may include one or more selected from the group consisting of acetylene black, Ketjen Black, and Super P.

In one embodiment, the content of a carbon-based negative electrode active material in a first negative electrode active material layer 21 may be 70% by weight to 99% by weight based on the total weight of the first negative electrode active material layer 21, and specifically, it may be 80% by weight to 98% by weight, more specifically 90% by weight to 97% by weight. Within the above-described range, the adhesion of a negative electrode may increase, and the electrical conductivity within a negative electrode may be improved.

The sum of the contents of a first silicon-based negative electrode active material and a carbon-based negative electrode active material in a first negative electrode active material layer 21 may be 80% by weight to 99.5% by weight based on the total weight of the first negative electrode active material layer 21, and specifically, it may be 80% by weight to 99t% by weight, more specifically, 85% by weight to 98% by weight. Within the above-described range, the energy density and capacity of a negative electrode may be improved, and at the same time, the long-term performance may be improved.

In an embodiment, a first negative electrode active material layer 21 may further include a conductive material. A conductive material may provide conductivity to a negative electrode 100.

A conductive material may include, for example, one or more selected from the group consisting of metal-based conductive materials, carbon-based conductive materials, and conductive polymers. Metallic conductive materials may be, for example, metal powder or metal fibers of copper, nickel, aluminum, silver, or the like; conductive whiskers such as zinc oxide and potassium titanate; or a conductive metal oxide such as titanium oxide. A carbon-based conductive material may be, for example, graphite, carbon black, graphene, or carbon nanotubes. A conductive polymer may be, for example, a polyphenylene derivative.

In one embodiment, a first negative electrode active material layer 21 may include carbon nanotubes as a conductive material. Carbon nanotubes may form a conductive network between silicon-based materials, thereby minimizing the problem of isolation of conductive paths by expansion of the volume of silicon-based materials due to long-term use of a secondary battery. Carbon nanotubes may include single-walled carbon nanotubes and multi-walled carbon nanotubes.

In one embodiment, a first negative electrode active material layer 21 may include a conductive material other than single-walled carbon nanotubes, in consideration of the economic aspects. In other words, a first negative active material layer 21 may be advantageous in terms of conductivity because it includes a relatively small proportion of a bulky silicon-based active material during charging and discharging, and accordingly, single-walled carbon nanotubes with high conductivity may be replaced by another conductive material. For example, multi-walled carbon nanotubes, graphite, carbon black, or the like may be included as a conductive material.

Multi-walled carbon nanotubes refer to carbon nanotubes containing multiple single-walled carbon nanotubes. Multi-walled carbon nanotubes are more economical than single-walled carbon nanotubes, and when disposed on the surface of a silicon-based material together with single-walled carbon nanotubes, they may contribute to forming a conductive network with adjacent silicon-based materials. The average diameter of multi-walled carbon nanotubes may be 5 nm to 200 nm, 5 nm to 100 nm, or 5 nm to 50 nm. When the above range is satisfied, they may be easily dispersed in a negative electrode active material composition, and a conductive network may be effectively formed between silicon-based materials. The average diameter is a value obtained by measuring the diameters of 100 multi-walled carbon nanotubes in a negative electrode active material layer using a scanning electron microscope (SEM) and then calculating their average. The average length of the multi-walled carbon nanotubes may be 0.1 µm to 100 µm, 0.1 µm to 50 µm, or 0.1 µm to 3 µm. When the above range is satisfied, the formation of a conductive network may be maximized even with a small content in a negative electrode active material composition. The average length is a value obtained by measuring the length of 100 multi-walled carbon nanotubes in a negative electrode active material layer using a SEM and then calculating their average.

In an embodiment, a conductive material in a first negative electrode active material layer 21 may be included in an amount of 0.01% by weight to 3.0% by weight, and specifically, it may be included in an amount of 0.02% by weight to 2.5% by weight, more specifically, 0.05% by weight to 2.0% by weight based on the total weight of the first negative electrode active material layer 21. Within the above-described range, even with a small conductive material content, the adhesion and electrical conductivity of a negative electrode may be significantly improved, and a secondary battery with excellent output characteristics and lifespan characteristics may be obtained.

In an embodiment, a first negative electrode active material layer 21 may further include a binder. A binder may improve the bonding force between a first negative electrode active material layer 21 and a negative electrode current collector 10 and the bonding force between negative electrode active materials. A binder may include, for example, one or more selected from the group consisting of polyvinylidene fluoride, carboxymethylcellulose, styrene butadiene rubber, polyacrylic acid, polyimide, polyamide imide, polyvinyl alcohol, hydroxypropylcellulose, polyvinyl chloride, carboxylated polyvinyl chloride, polyvinyl fluoride, polymers containing an ethylene oxide, polyvinylpyrrolidone, polyurethane, polytetrafluoroethylene, polyethylene, polypropylene, acrylated styrene-butadiene rubbers, and epoxy resins. In one embodiment, carboxymethyl cellulose, styrene butadiene rubber, polyacrylic acid, and polyvinyl alcohol may be used as a binder.

In an embodiment, a binder may further include a thickener that may enhance the cohesion of the binder. That is, in the present specification, a binder and a thickener may be collectively referred to as a binder. A thickener may improve the problem of cracks generated on the surface of a negative electrode by strengthening the cohesion of a binder. A thickener may include, for example, one or more selected from the group consisting of carboxymethyl cellulose, methyl cellulose, hydroxypropyl cellulose, methyl hydroxypropyl cellulose, ethyl hydroxyethyl cellulose, methyl ethyl hydroxyethyl cellulose, and cellulose gum.

In an embodiment, the content of a binder in a first negative electrode active material layer 21 may be 0.05% by weight to 10.0% by weight, 0.1% by weight to 8.0% by weight, 0.2% by weight to 7.0% by weight, or 0.3% by weight to 5.0% by weight based on the total weight of the first negative electrode active material layer 21. When the above-described range is satisfied, excellent negative electrode adhesion may be achieved while minimizing an increase of the negative electrode resistance.

A second negative electrode active material layer 22 is formed on at least one surface of a negative electrode current collector 10. A second negative electrode active material layer 22 includes a second silicon-based negative electrode active material.

In an embodiment, a second silicon-based negative active material may include one or more selected from the group consisting of SiOₓ (0≤x<2), an Si/C composite, and an Si alloy. The x corresponds to the number ratio of O to Si included in the SiOₓ (0≤x<2). In one embodiment, the average particle diameter (D50) of SiOₓ (0≤x<2) may be 4 µm to 9 µm, or 5 µm to 7 µm. When the above range is satisfied, a decrease in the lifespan of secondary batteries due to volume expansion of a silicon-based material may be prevented, and side reactions on the surface of a silicon-based material may be suppressed. In one embodiment, the specific surface area of SiOₓ (0≤x<2) may be 4 m²/g to 9 m²/g, or 5 m²/g to 8 m²/g. When the above range is satisfied, a conductive network with a conductive material may be improved. An Si/C composite is made by heat treatment (firing) while carbon is combined with SiOₓ (0≤x<2) particles, so that it may be in the form of a carbon material coated on the surface of SiOₓ (0≤x<2) particles or in the form of carbon dispersed in an atomic state inside SiOₓ (0≤x<2) particles. An Si alloy (Si-alloy) may be a form in which Si is alloyed with one or more metals selected from the group consisting of Zn, Al, Mn, Ti, Fe, and Sn.

A silicon-based negative electrode active material may exhibit higher capacity compared to a carbon-based material, implementing a high energy density per equal volume. In an embodiment, a second silicon-based negative electrode active material may be the same material as a first silicon-based negative electrode active material, but is not limited thereto, and a first silicon-based negative electrode active material and a second silicon-based negative electrode active material may be different from each other.

In an embodiment, the content of a second silicon-based negative electrode active material in a second negative electrode active material layer 22 may be 6% by weight to 35% by weight based on the total weight of the second negative electrode active material layer 22. Specifically, the content of a second silicon-based negative electrode active material in a second negative electrode active material layer 22 may be 7% by weight to 25% by weight, and more specifically, it may be 8% by weight to 20% by weight based on the total weight of the second negative electrode active material layer 22.

In an embodiment, the weight percentage of a second silicon-based negative electrode active material in a second negative electrode active material layer 22 based on the total weight of the second negative electrode active material layer 22 is greater than the weight percentage of a first silicon-based negative electrode active material in the a negative electrode active material layer 21 based on the total weight of the first negative electrode active material layer 21.

When a second silicon-based negative electrode active material in the same content as the above-described range is included in a second negative electrode active material layer 22, there is an effect of achieving capacity of a higher content for including a silicon-based active material, and at the same time, improving long-term performance by controlling the increase in stress due to the volume expansion of the silicon-based active material within an appropriate range.

In an embodiment, a second negative electrode active material layer 22 may further include a carbon-based negative electrode active material. A carbon-based negative electrode active material may include one or more selected from the group consisting of artificial graphite, natural graphite, hard carbon, soft carbon, carbon black, and graphene. In one embodiment, the carbon black may include one or more selected from the group consisting of acetylene black, Ketjen Black, and Super P.

In one embodiment, the content of a carbon-based negative electrode active material in a second negative electrode active material layer 22 may be 60% by weight to 95% by weight, and specifically, it may be 65% by weight to 93% by weight, more specifically 70% by weight to 92% by weight based on the total weight of the second negative electrode active material layer 22.

In an embodiment, the weight percentage of a carbon-based negative electrode active material in a second negative electrode active material layer 22 based on the total weight of the second negative electrode active material layer 22 may be smaller than the weight percentage of a carbon-based negative electrode active material in a first negative electrode active material layer 21 based on the total weight of the first negative active material layer 21.

Within the above-described range, the energy density of a negative electrode may be improved, the negative electrode adhesion may be increased, and the electrical conductivity within a negative electrode may be improved.

The sum of the contents of a second silicon-based negative electrode active material and a carbon-based negative electrode active material in a second negative electrode active material layer 22 may be 80% by weight to 99.5% by weight based on the total weight of the second negative electrode active material layer 22, and specifically, it may be 80% by weight to 99% by weight, and more specifically, 85% by weight to 98% by weight. Within the above-described range, the energy density and capacity of a negative electrode may be improved and at the same time, the long-term performance may be improved.

In an embodiment, a second negative electrode active material layer 22 may further include a conductive material. A conductive material may provide conductivity to a negative electrode 100.

A conductive material may include, for example, one or more selected from the group consisting of metal-based conductive materials, carbon-based conductive materials, and conductive polymers. Metallic conductive materials may be, for example, metal powder or metal fibers of copper, nickel, aluminum, silver, or the like; conductive whiskers such as zinc oxide and potassium titanate; or a conductive metal oxide such as titanium oxide. A carbon-based conductive material may be, for example, graphite, carbon black, graphene, or carbon nanotubes. A conductive polymer may be, for example, a polyphenylene derivative.

In one embodiment, a second negative electrode active material layer 22 may include carbon nanotubes as a conductive material. Carbon nanotubes may form a conductive network between silicon-based materials, thereby minimizing the problem of isolation of conductive paths by expansion of the volume of silicon-based materials due to long-term use of a secondary battery. Carbon nanotubes may include single-walled carbon nanotubes and multi-walled carbon nanotubes.

In one embodiment, a second negative electrode active material layer 22 may include single-walled carbon nanotubes as a conductive material.

Single-walled carbon nanotubes have a smaller diameter and longer length than multi-walled carbon nanotubes, so they may maximize a conductive effect when the same amount is applied, and their high flexibility allows them to more effectively form a conductive network between silicon-based materials. Therefore, the energy capacity retention rate of a secondary battery may be improved. The average diameter of single-walled carbon nanotubes may be 0.1 nm to 8.0 nm, 1.5 nm to 5.0 nm, or 1.5 nm to 3.0 nm. The average diameter is a value obtained by measuring the diameters of 100 single-walled carbon nanotubes in a negative electrode active material layer using a SEM and then calculating their average. The average length of the single-walled carbon nanotubes may be 3 µm to 20 µm, 4 µm to 20 µm, or 5 µm to 20 µm. When the above range is satisfied, a conductive network connecting silicon-based materials may be maintained despite excessive volume change of the silicon-based materials, and so the energy capacity retention rate of a secondary battery may be further improved. The average length is a value obtained by measuring the length of 100 single-walled carbon nanotubes in a negative electrode active material layer using a SEM and then calculating their average.

In an embodiment, the content of a conductive material in a second negative electrode active material layer 22 may be 0.01% by weight to 3.0% by weight, and specifically, it may be 0.02% by weight to 2.5% by weight, more specifically, 0.05% by weight to 2.0% by weight based on the total weight of the second negative electrode active material layer 22. Within the above-described range, even with a small conductive material content, the adhesion and electrical conductivity of a negative electrode may be significantly improved, and a secondary battery with excellent output characteristics and lifespan characteristics may be obtained.

In an embodiment, a second negative electrode active material layer 22 may further include a binder. A binder may improve the bonding force between negative electrode active materials. A binder may include, for example, one or more selected from the group consisting of polyvinylidene fluoride, carboxymethylcellulose, styrene butadiene rubber, polyacrylic acid, polyimide, polyamide imide, polyvinyl alcohol, hydroxypropylcellulose, polyvinyl chloride, carboxylated polyvinyl chloride, polyvinyl fluoride, polymers containing an ethylene oxide, polyvinylpyrrolidone, polyurethane, polytetrafluoroethylene, polyethylene, polypropylene, acrylated styrene-butadiene rubbers, and epoxy resins. In one embodiment, carboxymethyl cellulose, styrene butadiene rubber, polyacrylic acid, and polyvinyl alcohol may be used as a binder.

In an embodiment, a binder may further include a thickener that may enhance the cohesion of the binder. A thickener may improve the problem of cracks generated on the surface of a negative electrode by strengthening the cohesion of a binder. A thickener may include, for example, one or more selected from the group consisting of carboxymethyl cellulose, methyl cellulose, hydroxypropyl cellulose, methyl hydroxypropyl cellulose, ethyl hydroxyethyl cellulose, methyl ethyl hydroxyethyl cellulose, and cellulose gum.

In an embodiment, the content of a binder in a second negative electrode active material layer 22 may be 0.01% by weight to 8.0% by weight, 0.05% by weight to 6.0% by weight, 0.1% by weight to 5.0% by weight, or 0.5% by weight to 3.0% by weight based on the total weight of the second negative electrode active material layer 22.

In an embodiment, the weight percentage of a binder in the second negative electrode active material layer 22 based on the total weight of the second negative electrode active material layer 22 may be smaller than the weight percentage of a binder in the first negative electrode active material layer 21 based on the total weight of the first negative electrode active material layer 21.

When the above-described range is satisfied, excellent negative electrode adhesion may be achieved while minimizing an increase of the negative electrode resistance.

In an embodiment, the thickness of a second negative electrode active material layer 22 is greater than the thickness of a first negative electrode active material layer 21. Specifically, the ratio of the thickness of a first negative electrode active material layer 21 to the thickness of a second negative electrode active material layer 22 may be 4.5:5.5 to 0.5:9.5, and more specifically, it may be 4:6 to 1:9.

In other words, the thickness of a second negative electrode active material layer 22, which has a relatively high content of a silicon-based negative electrode active material, may be greater than the thickness of a first negative electrode active material layer 21, which has a relatively low content of a silicon-based negative electrode active material. Accordingly, even though a second negative electrode active material layer 22 includes a large amount of silicon-based negative electrode active materials, the distance between the silicon-based negative electrode active materials in the second negative electrode active material layer 22 may be relatively increased. When the thickness of a second negative electrode active material layer 22, which has a relatively high content of a silicon-based negative electrode active material, is thinner than the thickness of a first negative electrode active material layer 21, which has a relatively low content of a silicon-based negative electrode active material, the distance between silicon-based negative electrode active materials may be extremely short in the second negative electrode active material layer 22. In this case, a decrease in the long-duration cyclic characteristics may occur due to a volume change of a silicon-based active material during charging and discharging.

The thickness of a second negative electrode active material layer 22, which has a relatively high content of a silicon-based negative electrode active material, may be set to be greater than the thickness of a first negative electrode active material layer 21, which has a relatively low content of a silicon-based negative electrode active material so that, even when the volume of a silicon-based negative electrode active material changes during charging and discharging, the long-duration cyclic characteristics of a secondary battery may be improved by minimizing the change in porosity.

In an embodiment, the sum of the contents of a first silicon-based negative electrode active material and a second silicon-based negative electrode active material included in an entire negative electrode active material layer 20 may be 5% by weight to 20% by weight based on the total weight of the negative electrode active material layer 20, and specifically, it may be 6% by weight to 15% by weight. When the above-described range is satisfied, the energy density of a negative electrode may be improved, and the energy capacity retention rate of a secondary battery may be improved.

In an embodiment, the content of a carbon-based negative electrode active material included in an entire negative electrode active material layer 20 may be 75% by weight to 95% by weight, and specifically, it may be 80% by weight to 93% by weight. When the above-described range is satisfied, the energy density of a negative electrode may be improved, the negative electrode adhesion may be increased, and the electrical conductivity within a negative electrode may be improved.

### Manufacturing method of negative electrode for secondary batteries

Provided is a manufacturing method of a negative electrode for secondary batteries, including: a step of forming a first layer by applying a first composition including a first silicon-based negative electrode active material onto a negative electrode current collector; and a step of forming a second layer that is thicker than the first layer by applying a second composition including a second silicon-based negative electrode active material onto the first layer, wherein the content of the first silicon-based negative electrode active material in the first composition is 5% by weight or less based on the total weight of solids included in the first composition, and the weight percentage of the second silicon-based negative electrode active material in the second composition based on the total weight of solids included in the second composition is greater than the weight percentage of the first silicon-based negative electrode active material in the first composition based on the total weight of solids included in the first composition.

FIG. 2 is a flowchart for explaining a manufacturing method of a negative electrode for secondary batteries according to an embodiment of the present disclosure. Hereinafter, a manufacturing method of a negative electrode for secondary batteries according to an embodiment of the present disclosure will be described with reference to FIG. 2.

Referring to FIG. 2, in Step S100, a first composition is applied onto a negative electrode current collector. More specifically, a first composition may be applied onto at least one surface of a negative electrode current collector. A first layer may be formed by applying a first composition.

A first composition includes a first silicone-based negative electrode active material. All of the contents mentioned in the description of a negative electrode for secondary batteries may be applied to a first silicon-based negative electrode active material.

In one embodiment, the content of a first silicon-based negative electrode active material in a first composition may be 5% by weight or less based on the total weight of solids included in the first composition. Specifically, the content of a first silicon-based negative electrode active material in a first composition may be 0.2% by weight to 4.5% by weight based on the total weight of solids included in the first composition, and more specifically, it may be 0.5% by weight to 4% by weight.

In an embodiment, a first composition may further include a carbon-based negative electrode active material. All of the contents mentioned in the description of a negative electrode for secondary batteries may be applied to a carbon-based negative electrode active material.

In one embodiment, the content of a carbon-based negative active material in a first composition may be 70% by weight to 99% by weight based on the total weight of solids included in the first composition, and specifically, it may be 80% by weight to 98% by weight, and more specifically, 90% by weight to 97% by weight.

In an embodiment, a first composition may further include a conductive material. All of the contents mentioned in the description of a negative electrode for secondary batteries may be applied to a conductive material.

In one embodiment, the content of a conductive material in a first composition may be 0.01% by weight to 3.0% by weight based on the total weight of solids included in the first composition, and specifically, it may be 0.02% by weight to 2.5% by weight, and more specifically, 0.05% by weight to 2.0% by weight.

In an embodiment, a first composition may further include a binder. All of the contents mentioned in the description of a negative electrode for secondary batteries may be applied to a binder.

In one embodiment, the content of a binder in a first composition may be 0.05% by weight to 10.0% by weight, 0.1% by weight to 8.0% by weight, 0.2% by weight to 7.0% by weight, 0.3% by weight to 5.0% by weight based on the total weight of solids included in the first composition.

In an embodiment, a first composition may in a form including the above-described first silicon-based negative electrode active material, a carbon-based negative electrode active material, a conductive material, and a binder in a solvent, and in one embodiment, it may be a composition in the form of a slurry. The solvent may include, for example, one or more substances selected from the group consisting of water, methanol, ethanol, ethylene glycol, diethylene glycol, and glycerol.

Next, in Step S200, a second composition is applied onto a first layer. A second layer may be formed by applying a second composition.

A second composition includes a second silicone-based negative electrode active material. All of the contents mentioned in the description of a negative electrode for secondary batteries may be applied to a second silicon-based negative electrode active material.

In one embodiment, the content of a second silicone-based negative electrode active material in a second composition may be 6% by weight to 35% by weight based on the total weight of solids included in the second composition. Specifically, the content of a second silicone-based negative electrode active material in a second composition may be 7% by weight to 25% by weight based on the total weight of solids included in the second composition, and more specifically, it may be 8% by weight to 20% by weight.

In an embodiment, the weight percentage of a second silicon-based negative electrode active material in a second composition based on the total weight of solids included in the second composition may greater than the weight percentage of a first silicon-based negative electrode active material in a first composition based on the total weight of solids included in the first composition.

In an embodiment, a second composition may further include a carbon-based negative electrode active material. All of the contents mentioned in the description of a negative electrode for secondary batteries may be applied to a carbon-based negative electrode active material.

In one embodiment, the content of a carbon-based negative active material in a second composition may be 60% by weight to 95% by weight based on the total weight of solids included in the second composition, and specifically, it may be 65% by weight to 93% by weight, and more specifically, 70% by weight to 92% by weight.

In an embodiment, the weight percentage of a carbon-based negative active material in a second composition based on the total weight of solids included in the second composition may smaller than the weight percentage of a carbon-based negative active material in a first composition based on the total weight of solids included in the first composition.

In an embodiment, a second composition may further include a conductive material. All of the contents mentioned in the description of a negative electrode for secondary batteries may be applied to a conductive material.

In one embodiment, the content of a conductive material in a second composition may be 0.01% by weight to 3.0% by weight based on the total weight of solids included in the second composition, and specifically, it may be 0.02% by weight to 2.5% by weight, and more specifically, 0.05% by weight to 2.0% by weight.

In an embodiment, a second composition may further include a binder. All of the contents mentioned in the description of a negative electrode for secondary batteries may be applied to a binder.

In one embodiment, the content of a binder in a second composition may be 0.01% by weight to 8.0% by weight, 0.05% by weight to 6.0% by weight, 0.1% by weight to 5.0% by weight, 0.5% by weight to 3.0% by weight based on the total weight of solids included in the second composition.

In an embodiment, the weight percentage of a binder in a second composition based on the total weight of solids included in the second composition may smaller than the weight percentage of a binder in a first composition based on the total weight of solids included in the first composition.

In an embodiment, a second composition may in a form including the above-described second silicon-based negative electrode active material, a carbon-based negative electrode active material, a conductive material, and a binder in a solvent, and in one embodiment, it may be a composition in the form of a slurry. The solvent may include, for example, one or more substances selected from the group consisting of water, methanol, ethanol, ethylene glycol, diethylene glycol, and glycerol.

Step S100 of applying a first composition and Step S200 of applying a second composition may be performed sequentially or simultaneously. In one embodiment, a first composition and a second composition may be simultaneously applied on a negative electrode current collector using dual coating equipment.

After Step S200, a step of drying a first composition and a second composition applied onto at least one surface of a negative electrode current collector may be further included.

Accordingly, a first layer manufactured by a first composition and a second layer manufactured by a second composition are dried to form a first negative electrode active material layer and a second negative electrode active material layer.

In an embodiment, the ratio of the thickness of a first layer to a second layer before drying may be 4.5:5.5 to 0.5:9.5, and more specifically, it may be 4:6 to 1:9.

Alternatively, the ratio of the thickness of a first negative electrode active material layer to a second negative electrode active material layer after drying may be 4.5:5.5 to 0.5:9.5, and more specifically, it may be 4:6 to 1:9.

### Secondary battery

In addition, in another aspect of the present disclosure, a secondary battery including the above-described negative electrode for secondary batteries may be provided.

As described above, a negative electrode for secondary batteries may include a negative electrode current collector and a negative electrode active material layer, and the negative electrode active material layer may include a first negative electrode active material layer and a second negative electrode active material layer.

A secondary battery includes a positive electrode and a separator in addition to a negative electrode according to the present disclosure. A positive electrode may include a positive electrode current collector and an active material layer disposed on the positive electrode current collector. An active material layer may include an active material. For example, a positive electrode active material layer may include a positive electrode active material, and the positive active material may be a material which lithium ions may be inserted to and extracted from.

A positive electrode active material may be a lithium metal oxide. For example, a positive electrode active material may be one of a lithium manganese-based oxide, a lithium nickel-based oxide, a lithium cobalt-based oxide, a lithium nickel manganese-based oxide, a lithium nickel cobalt aluminum-based oxide, a lithium iron phosphate-based compound, a lithium manganese phosphate-based compound, and a lithium cobalt phosphate-based compound, and a lithium vanadium phosphate-based compound, and is not necessarily limited to a specific example.

A separator may be interposed between a negative electrode and a positive electrode. A separator is formed to prevent electrical short-circuiting between a negative electrode and a positive electrode and to generate a flow of ions. A separator may include a porous polymer film or a porous non-woven fabric. Here, the porous polymer film may be formed to be a single layer or a multilayer including a polyolefin-based polymer such as an ethylene polymer, a propylene polymer, an ethylene/butene copolymer, an ethylene/hexene copolymer, and an ethylene/methacrylate copolymer. The porous nonwoven fabric may include glass fibers with a high melting point and polyethylene terephthalate fibers. However, it is not limited thereto, and depending on the embodiment, a separator may be a highly heat-resistant separator (CCS; ceramic coated separator; CCS) including ceramic.

A negative electrode, a positive electrode, and a separator may be manufactured into an electrode assembly by winding, lamination, folding, or zigzag stacking processes. In addition, an electrode assembly may be provided together with an electrolyte solution to manufacture a secondary battery according to the present disclosure. A secondary battery may be any one of a cylindrical type using a can, a prismatic type, a pouch type, or a coin type, but is not limited thereto.

An electrolyte solution may be a non-aqueous electrolyte solution. An electrolyte solution may include a lithium salt and an organic solvent. An organic solvent may include at least any one of propylene carbonate (PC), ethylene carbonate (EC), diethyl carbonate (DEC), dimethyl carbonate (DMC), ethylmethyl carbonate (EMC), methylpropyl carbonate (MPC), dipropyl carbonate (DPC), vinylene carbonate (VC), dimethyl sulfoxide, acetonitrile, dimethoxyethane, diethoxyethane, sulfolane, gamma-butyrolactone, propylene sulfide, or tetrahydrofuran.

### Examples

Hereinafter, a negative electrode for secondary batteries and a secondary battery according to the present disclosure will be described in more detail based on examples and comparative examples. However, the following examples and comparative examples are only examples to explain the present disclosure in more detail, and the present disclosure is not limited by the following examples and comparative examples.

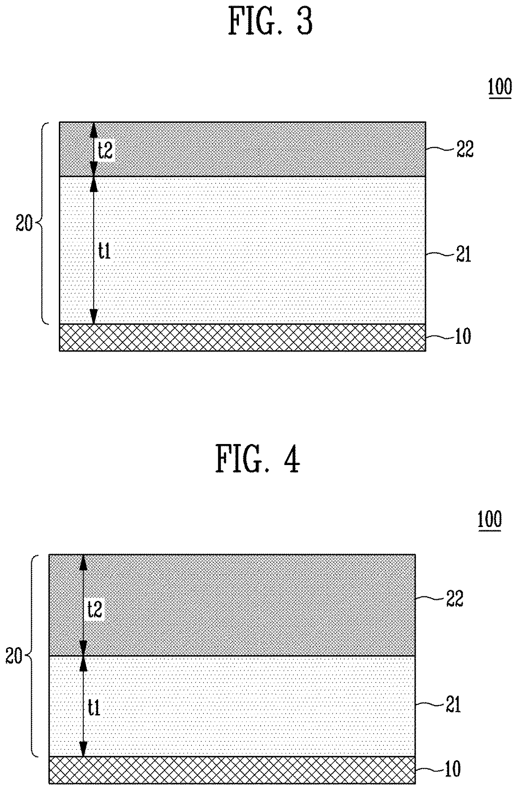

FIG. 3 is a diagram for explaining a negative electrode for secondary batteries according to one comparative example of the present disclosure.

FIG. 4 is a diagram for explaining a negative electrode for secondary batteries according to another comparative example of the present disclosure.

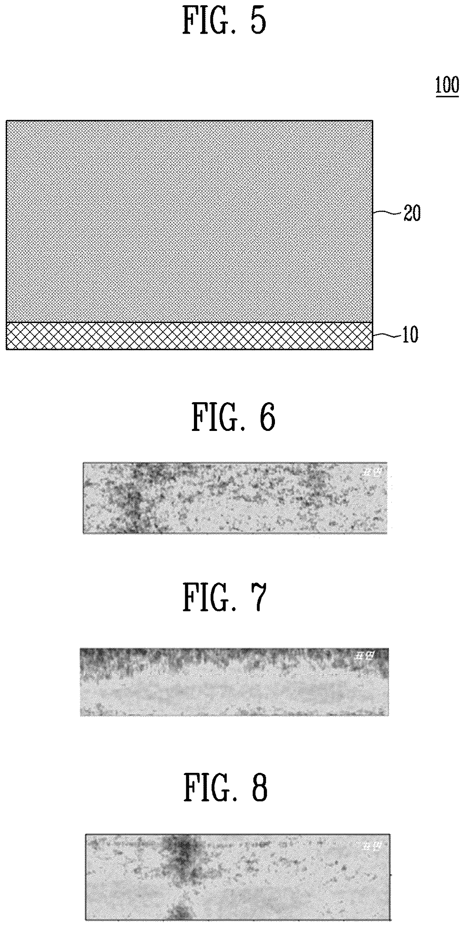

FIG. 5 is a diagram for explaining a negative electrode for secondary batteries according to still another comparative example of the present disclosure.

### Example 1

### <Preparation of first composition>

A carbon-based negative electrode active material prepared by mixing artificial graphite (D₅₀: 13 µm) and natural graphite (D₅₀: 10 µm) in water as a solvent, silicon oxide (SiO), multi-walled carbon nanotubes (MWCNT), and carboxymethyl cellulose (CMC), and styrene butadiene rubber (SBR) were mixed at a ratio of 93.4:2.0:1.0:1.2:2.4 by weight to prepare a first composition.

### <Preparation of second composition>

A carbon-based negative electrode active material prepared by mixing artificial graphite (D₅₀: 13 µm) and natural graphite (D₅₀: 10 µm) in water as a solvent, silicon oxide (SiO), single-walled carbon nanotubes (SWCNT), and CMC, and SBR were mixed at a ratio of 86.63:10.57:1.0:1.2:0.6 by weight to prepare a second composition.

### <Manufacture of negative electrode>

A first composition and a second composition that were prepared were simultaneously applied onto a copper thin film using a dual-layer slot die, and accordingly, a first layer resulting from the first composition was formed on the copper thin film, which was a negative electrode current collector, and a second layer resulting from the second composition was formed on the first layer. Afterwards, drying was performed under vacuum at 130 °C for one hour to manufacture a negative electrode provided with a first negative electrode active material layer formed by drying the first layer and a second negative electrode active material layer formed by drying the second layer.

Here, the first composition and the second composition were applied so that the thickness ratio of the first layer to the second layer was 3:7. The structure of the negative electrode of Example 1 may be understood with reference to FIG. 1. In other words, in FIG. 1, t1<t2, and more specifically, t1:t2=3:7.

### <Manufacture of positive electrode>

As an active material, Li[Ni_{0.88}Co_{0.10}Mn_{0.02}]O₂, carbon black, and polyvinylidene fluoride (PVdF) were mixed at a ratio of 96:3:1 by weight to prepare a slurry. The slurry was uniformly applied to an aluminum foil and dried under vacuum to manufacture a positive electrode.

### <Manufacture of secondary battery>

The negative electrode and the positive electrode were each notched to a predetermined size and laminated, and a PE separator was interposed between the negative electrode and the positive electrode to form an electrode cell, and then tab portions of the negative electrode and the positive electrode were each welded. The welded negative electrode/separator/positive electrode assembly was placed in a pouch and sealed on three surfaces except for an electrolyte solution injection portion.

An electrolyte solution was injected through the electrolyte solution injection portion, and the remaining surface was sealed and impregnated for 12 hours or longer. The electrolyte solution used was 1 M LiPF₆ dissolved in a mixed solvent of EC/EMC/DEC.

Afterwards, pre-charging was performed for 36 minutes with a current corresponding to 0.25 C. Degassing was performed after one hour, and after aging for 24 hours or longer, formation charging and discharging were performed (charging conditions: CC-CV 0.2 C, 4.2 V, 0.05 C CUT-OFF; discharge conditions: CC 0.2 C 2.5 V CUTOFF). Afterwards, standard charging and discharging were performed (charging conditions: CC-CV 0.33 C, 4.2 V, 0.05 C CUT-OFF; discharging conditions: CC 0.33 C, 2.5 V, CUT-OFF) to manufacture a secondary battery.

### Comparative Example 1

### <Preparation of first composition>

A carbon-based negative electrode active material prepared by mixing artificial graphite (D₅₀: 13 µm) and natural graphite (D₅₀: 10 µm) in water as a solvent, silicon oxide (SiO), MWCNT, and CMC, and SBR were mixed at a ratio of 94.15:1.25:1.0:1.2:2.4 by weight to prepare a first composition.

### <Preparation of second composition>

A carbon-based negative electrode active material prepared by mixing artificial graphite (D₅₀: 13 µm) and natural graphite (D₅₀: 10 µm) in water as a solvent, silicon oxide (SiO), SWCNT, and CMC, and SBR were mixed at a ratio of 62.2:35.0:1.0:1.2:0.6 by weight to prepare a second composition.

### <Manufacture of negative electrode>

A negative electrode was manufactured in the same manner as in Example 1, except that the above-described first composition and second composition were applied so that the thickness ratio of the first layer and the second layer was 8:2. The structure of the negative electrode of Comparative Example 1 may be understood with reference to FIG. 3. In other words, in FIG. 1, t1>t2, and more specifically, t1:t2=8:2.

### <Manufacture of positive electrode>

A positive electrode was manufactured in the same manner as in Example 1.

### <Manufacture of secondary battery>

A secondary battery was manufactured in the same manner as in Example 1, except that the above-described negative electrode was used.

### Comparative Example 2

### <Preparation of first composition>

A carbon-based negative electrode active material prepared by mixing artificial graphite (D₅₀: 13 µm) and natural graphite (D₅₀: 10 µm) in water as a solvent, silicon oxide (SiO), MWCNT, and CMC, and SBR were mixed at a ratio of 93.4:2.0:1.0:1.2:2.4 by weight to prepare a first composition.

### <Preparation of second composition>

A carbon-based negative electrode active material prepared by mixing artificial graphite (D₅₀: 13 µm) and natural graphite (D₅₀: 10 µm) in water as a solvent, silicon oxide (SiO), SWCNT, and CMC, and SBR were mixed at a ratio of 83.2:14.0:1.0:1.2:0.6 by weight to prepare a second composition.

### <Manufacture of negative electrode>

A negative electrode was manufactured in the same manner as in Example 1, except that the above-described first composition and second composition were applied so that the thickness ratio of the first layer and the second layer was 5:5. The structure of the negative electrode of Comparative Example 2 may be understood with reference to FIG. 4. In other words, in FIG. 1, t1-t2, and more specifically, t1:t2=5:5.

### <Manufacture of positive electrode>

A positive electrode was manufactured in the same manner as in Example 1.

### <Manufacture of secondary battery>

A secondary battery was manufactured in the same manner as in Example 1, except that the above-described negative electrode was used.

### Comparative Example 3

### <Preparation of first composition>

A carbon-based negative electrode active material prepared by mixing artificial graphite (D₅₀: 13 µm) and natural graphite (D₅₀: 10 µm) in water as a solvent, silicon oxide (SiO), MWCNT, and CMC, and SBR were mixed at a ratio of 87.4:8.0:1.0:1.2:2.4 by weight to prepare a first composition.

### <Preparation of second composition>

A carbon-based negative electrode active material prepared by mixing artificial graphite (D₅₀: 13 µm) and natural graphite (D₅₀: 10 µm) in water as a solvent, silicon oxide (SiO), SWCNT, and CMC, and SBR were mixed at a ratio of 89.2:8.0:1.0:1.2:0.6 by weight to prepare a second composition.

### <Manufacture of negative electrode>

A negative electrode was manufactured in the same manner as in Example 1, except that the above-described first composition and second composition were applied. The structure of the negative electrode of Comparative Example 3 may be understood with reference to FIG. 1. In other words, in FIG. 1, t1<t2, and more specifically, t1:t2=3:7.

### <Manufacture of positive electrode>

A positive electrode was manufactured in the same manner as in Example 1.

### <Manufacture of secondary battery>

A secondary battery was manufactured in the same manner as in Example 1, except that the above-described negative electrode was used.

### Comparative Example 4

### <Preparation of negative electrode>

A carbon-based negative electrode active material prepared by mixing artificial graphite (D₅₀: 13 µm) and natural graphite (D₅₀: 10 µm) in water as a solvent, silicon oxide (SiO), MWCNT, and CMC, and SBR were mixed at a ratio of 88.30:8.0:1.0:1.2:1.5 by weight to prepare a first composition.

The prepared negative electrode active material composition was applied onto a copper thin film and dried under vacuum at 130 °C for one hour. The structure of the negative electrode of Comparative Example 4 may be understood with reference to FIG. 5.

### <Manufacture of positive electrode>

A positive electrode was manufactured in the same manner as in Example 1.

### <Manufacture of secondary battery>

A secondary battery was manufactured in the same manner as in Example 1, except that the above-described negative electrode was used.

### <Experiment Example 1> Evaluation of negative electrode active material layer characteristics

In the above-described Example 1 and Comparative Examples 1 to 4, the ingredients included in the negative electrode active material layer in the dried negative electrode are summarized in Table 1 below.

**[Table 1]**

| Electrode information | Layer | Graphite (wt%) | Silicon oxide (wt%) | SWCNT (wt%) | MWCNT (wt%) | CMC (wt%) | SBR (wt%) | Occurrence of negative electrode detachment |
|---|---|---|---|---|---|---|---|---|
| Example 1 | First layer | 93.40 | 200 | - | 100 | 1.20 | 2.40 | X |
| | Second layer | 86.63 | 10.57 | 1.00 | - | 1.20 | 0.60 | |
| | Total | 88.66 | 8.00 | 0.70 | 0.30 | 1.20 | 1.14 | |
| Comparative Example 1 | First layer | 94.15 | 1.25 | - | 100 | 1.20 | 2.40 | X |
| | Second layer | 62.20 | 35.00 | 100 | - | 1.20 | 0.60 | |
| | Total | 87.76 | 8.00 | 0.20 | 0.80 | 1.20 | 204 | |
| Comparative Example 2 | First layer | 93.40 | 200 | - | 100 | 1.20 | 2.40 | X |
| | Second layer | 83.20 | 1400 | 100 | - | 1.20 | 0.60 | |
| | Total | 88.30 | 800 | 0.50 | 0.50 | 1.20 | 1.50 | |
| Comparative Example 3 | First layer | 87.40 | 800 | - | 100 | 1.20 | 2.40 | X |
| | Second layer | 89.20 | 800 | 100 | - | 1.20 | 0.60 | |
| | Total | 88.66 | 800 | 0.50 | 0.50 | 1.20 | 1.14 | |
| Comparative Example 4 | Total | 88.30 | 8.00 | 100 | - | 1.20 | 1.50 | ○ |

Referring to Table 1, it can be confirmed that the contents of the ingredients included in each layer of Example 1 and Comparative Examples 1 to 4 were all set differently, but the contents of graphite and silicon oxide included in the entire negative electrode active material layer were almost the same in all of Example 1 and Comparative Examples 1 to 4.

In addition, it can be confirmed that in Example 1 and Comparative Examples 1 to 3, in which the first layer in contact with the current collector included a relatively large amount of SBR, the adhesion between the current collector and the negative electrode active material layer was excellent, and thus detachment of the negative electrode did not occur, but in Comparative Example 4 in which the first layer and the second layer were not separated but formed as a single layer, due to the migration of SBR, a binder, which occurred during the drying process, the adhesion between the negative electrode active material layer and the negative electrode current collector was relatively low, and thus detachment of the negative electrode occurred.

### <Experimental Example 2> Evaluation of porosity uniformity

FIG. 6 shows simulation results representing a change in porosity of a negative electrode for secondary batteries according to one embodiment of the present disclosure.

FIG. 7 shows simulation results representing a change in porosity of a negative electrode for secondary batteries according to one comparative example of the present disclosure.

FIG. 8 shows simulation results representing a change in porosity of a negative electrode for secondary batteries according to another comparative example of the present disclosure.

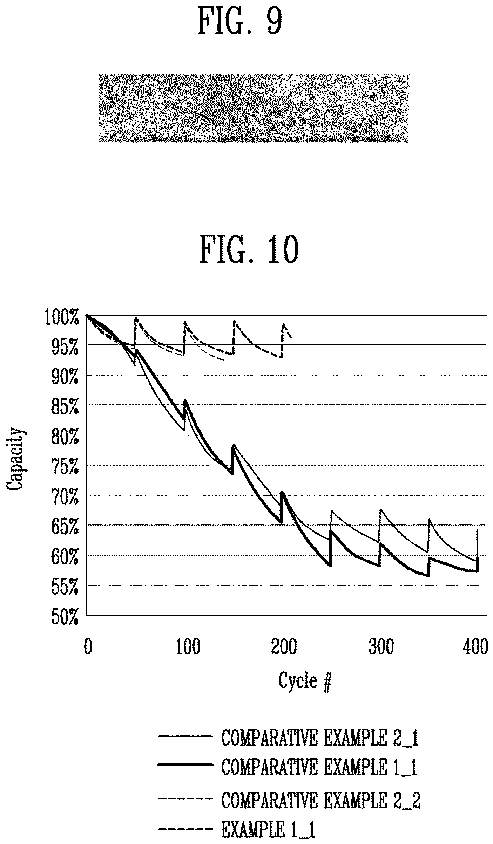

FIG. 9 shows simulation results representing a change in porosity of a negative electrode for secondary batteries according to still another comparative example of the present disclosure.

After measuring the negative electrodes of Example 1, Comparative Example 1, Comparative Example 2, and Comparative Example 4 with a 3D X-ray microscope (XRM), under the assumption that the x-axis and y-axis are fixed and volume expansion occurs only along the z-axis in the thickness direction, the change in porosity within the negative electrode was simulated through volume expansion simulation for graphite and silicon oxide. At this time, the volume expansion of graphite was assumed to be 20%, and the volume expansion of silicon oxide was assumed to be 150%. The simulation results according to this are shown in FIGS. 6 to 9. In FIG. 6 to 9, the y-axis direction (vertical direction) is the thickness direction of the electrode, and the smaller the color deviation, the more uniform the porosity.

Referring to FIG. 9, it can be confirmed that when graphite and silicon oxide were uniformly included throughout the electrode as in Comparative Example 4, the porosity was the most uniform. However, as described above, the negative electrode of Comparative Example 4 has the disadvantage that the adhesion between the negative electrode active material layer and the negative electrode current collector decreases due to the migration of SBR, a binder, during the drying process, so its application may be limited.

In addition, referring to FIG. 6, it can be confirmed that the porosity was uniform even when the second layer with a relatively large silicon oxide content was thick, as in Example 1.

On the other hand, referring to FIGS. 7 and 8, it can be confirmed that the porosity was not uniform in Comparative Example 1 and Comparative Example 2.

In other words, it can be confirmed from the results of Experimental Example 2 that when the thickness of the second layer with a relatively large silicon oxide content is set to be thicker than the first layer, the uniformity of porosity may be improved.

### <Experiment Example 3> Evaluation of secondary battery cycle characteristics

FIG. 10 is a graph showing capacity maintenance rates of an embodiment and comparative examples of the present disclosure, according to an experimental example of the present disclosure.

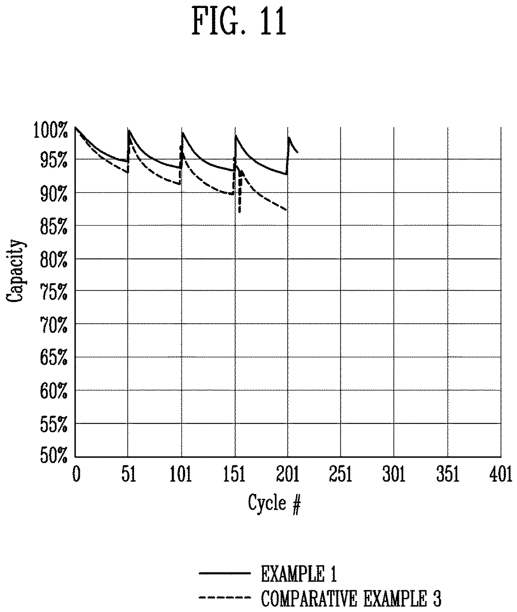

FIG. 11 is a graph showing capacity maintenance rates of an embodiment and a comparative example of the present disclosure, according to an experimental example of the present disclosure.

First, charging and discharging were performed with the secondary battery of Comparative Example 1 and the secondary battery of Comparative Example 2 by setting the rapid charging time to 22 minutes for 80% state of charge (SOC), and the results of the capacity retention rate according to the charging and discharging cycle are shown in FIG. 10 (Comparative Example 1_1 and Comparative Example 2_1).

Referring to FIG. 10, it can be confirmed that the decrease in capacity in Comparative Example 1 was greater than in Comparative Example 2, as charging and discharging progressed. In other words, it can be confirmed that the cycle characteristics were poor in Comparative Example 1 in which the second layer had a relatively thin thickness, compared to Comparative Example 2 in which the first layer and the second layer had the same thickness.

In addition, charging and discharging were performed with the secondary battery of Example 1 and the secondary battery of Comparative Example 2 by setting the rapid charging time to 27 minutes for 80% state of charge (SOC), and the results of the capacity retention rate according to the charging and discharging cycle are shown in FIG. 10 (Example 1_1 and Comparative Example 2_2).

Referring to FIG. 10, it can be confirmed that Example 1 showed almost no decrease in capacity even when charging and discharging progressed, and that the capacity was greater than that of the secondary battery of Comparative Example 2. In other words, it can be confirmed that the cycle characteristics were superior in Example 1 in which the second layer had a relatively thick thickness compared to Comparative Example 2 in which the first layer and the second layer had the same thickness.

In addition, charging and discharging were performed with the secondary battery of Example 1 and the secondary battery of Comparative Example 3 by setting the rapid charging time to 27 minutes for 80% state of charge (SOC), and the results of the capacity retention rate according to the charging and discharging cycle are shown in FIG. 11.

Referring to FIG. 11, it can be confirmed that Example 1 showed almost no decrease in capacity even when charging and discharging progressed, and that the capacity was greater than that of the secondary battery of Comparative Example 3. In other words, it can be confirmed that the cycle characteristics were superior in Example 1 in which the first layer had a relatively low silicon oxide content compared to Comparative Example 3 in which the first layer had a relatively high silicon oxide content.

## Claims

1. A negative electrode for secondary batteries, comprising:
a negative electrode current collector;
a first negative electrode active material layer formed on at least one surface of the negative electrode current collector and including a first silicon-based negative electrode active material; and
a second negative electrode active material layer formed on the first negative electrode active material, including a second silicon-based negative electrode active material, and having a greater thickness than that of the first negative electrode active material layer,
wherein in the first negative electrode active material layer, the content of the first silicon-based negative electrode active material is 5% by weight or less based on the total weight of the first negative electrode active material layer, and
the weight percentage of the second silicon-based negative electrode active material in the second negative electrode active material layer based on the total weight of the second negative electrode active material layer is greater than the weight percentage of the first silicon-based negative electrode active material in the first negative electrode active material layer based on the total weight of the first negative electrode active material layer.

2. The negative electrode for secondary batteries according to claim 1, wherein the first silicon-based negative electrode active material and the second silicon-based negative electrode active material include one or more selected from the group consisting of SiOₓ (0≤x<2), an Si/C composite, and an Si alloy.

3. The negative electrode for secondary batteries according to claims 1 or 2, wherein the first negative electrode active material layer and the second negative electrode active material layer further include a carbon-based negative electrode active material,
preferably wherein the carbon-based negative electrode active material includes one or more selected from the group consisting of artificial graphite, natural graphite, hard carbon, soft carbon, carbon black, and graphene.

4. The negative electrode for secondary batteries according to any one of claims 1 to 3, wherein the sum of the contents of the first silicon-based negative electrode active material and the second silicon-based negative electrode active material included in the entire first negative electrode active material layer and the second negative electrode active material layer is 5% by weight to 20% by weight based on the total weight of the entire first negative electrode active material layer and the second negative electrode active material layer.

5. The negative electrode for secondary batteries according to any one of claims 1 to 4, wherein the content of the carbon-based negative electrode active material included in the entire first negative electrode active material layer and the second negative electrode active material layer is 75% by weight to 95% by weight based on the total weight of the entire first negative electrode active material layer and the second negative electrode active material layer.

6. The negative electrode for secondary batteries according to any one of claims 1 to 5, wherein the ratio of the thickness of the first negative electrode active material layer to the thickness of the second negative electrode active material layer is 4:6 to 1:9.

7. The negative electrode for secondary batteries according to any one of claims 1 to 6, wherein the content of the second silicon-based negative electrode active material in the second negative electrode active material layer is 6% by weight to 35% by weight based on the total weight of the second negative electrode active material layer.

8. The negative electrode for secondary batteries according to any one of claims 1 to 7, wherein the first negative electrode active material layer and the second negative electrode active material layer further include a conductive material, and/or
wherein the first negative electrode active material layer and the second negative electrode active material layer further include a binder.

9. The negative electrode for secondary batteries according to claim 8, wherein the weight percentage of the binder in the first negative electrode active material layer based on the total weight of the first negative electrode active material layer is greater than the weight percentage of the binder in the second negative electrode active material layer based on the total weight of the second negative electrode active material layer.

10. The negative electrode for secondary batteries according to any one of claims 1 to 9, wherein the weight percentage of the carbon-based negative electrode active material in the first negative electrode active material layer based on the total weight of the first negative electrode active material layer is greater than the weight percentage of the carbon-based negative electrode active material in the second negative electrode active material layer based on the total weight of the second negative electrode active material layer,
preferably wherein the sum of the contents of the fist silicon-based negative electrode active material and the carbon-based negative electrode active material in the first negative electrode active material layer based on the total weight of the first negative electrode active material layer is 85% by weight to 98% by weight, and/or the sum of the contents of the second silicon-based negative electrode active material and the carbon-based negative electrode active material in the second negative electrode active material layer based on the total weight of the second negative electrode active material layer is 85% by weight to 98% by weight.

11. A manufacturing method of a negative electrode for secondary batteries, comprising:
a step of forming a first layer by applying a first composition including a first silicon-based negative electrode active material onto a negative electrode current collector; and
a step of forming a second layer that is thicker than the first layer by applying a second composition including a second silicon-based negative electrode active material onto the first layer,
wherein the content of the first silicon-based negative electrode active material in the first composition is 5% by weight or less based on the total weight of solids included in the first composition, and
the weight percentage of the second silicon-based negative electrode active material in the second composition based on the total weight of solids included in the second composition is greater than the weight percentage of the first silicon-based negative electrode active material in the first composition based on the total weight of solids included in the first composition.

12. The manufacturing method of a negative electrode for secondary batteries according to claim 11, wherein the first composition and the second composition further include a carbon-based negative electrode active material,
preferably wherein the weight percentage of the carbon-based negative electrode active material in the first composition based on the total weight of solids included in the first composition is greater than the weight percentage of the carbon-based negative electrode active material in the second composition based on the total weight of solids included in the second composition.

13. The manufacturing method of a negative electrode for secondary batteries according to claims 11 or 12, wherein the first composition and the second composition further include a binder.

14. The manufacturing method of a negative electrode for secondary batteries according to any one of claims 11 to 13, wherein the weight percentage of binder in the first composition based on the total weight of solids included in the first composition is greater than the weight percentage of the binder in the second composition based on the total weight of solids included in the second composition.

15. The manufacturing method of a negative electrode for secondary batteries according to any one of claims 11 to 14, wherein the ratio of the thickness of the first layer to the thickness of the second layer is 4:6 to 1:9.
